# EUROPEAN PATENT APPLICATION

(11) **EP 4 786 265 A1**
(43) Date of publication of application: **05.08.2026**
(21) Application number: 24870796.0
(22) Date of filing: 25.09.2024
(51) Int. Cl.: B60N 2/08

(54) **LOCKING SPRING PIECE, SLIDING RAIL ASSEMBLY, SEAT AND VEHICLE**

(30) Priority: 26.09.2023 CN 202322624196 U
(71) Applicant: BYD Company Limited, Shenzhen, Guangdong 518118 (CN)
(72) Inventor: YANG, Liu, Shenzhen, Guangdong 518118 (CN); TIAN, Xiangyou, Shenzhen, Guangdong 518118 (CN); JIAO, Rongcheng, Shenzhen, Guangdong 518118 (CN); HOU, Yun, Shenzhen, Guangdong 518118 (CN); TANG, Jiagui, Shenzhen, Guangdong 518118 (CN)
(74) Representative: Mathys & Squire
(86) International application number: PCT/CN2024/121151
(87) International publication number: WO 2025/067252

(57) **Abstract**

An elastic locking piece (10), a slide rail assembly (100), a seat (200), and a vehicle (300) are provided. The elastic locking piece (10) is applied to a slide rail (30). The elastic locking piece (10) is provided with a connection hole (111), and a first toothed portion (112) is disposed at an inner wall (1110) of the connection hole (111). The first toothed portion (112) includes at least one tooth (1121), and the at least one tooth (1121) of the first toothed portion (112) protrudes from the inner wall (1110) of the connection hole (111). The connection hole (111) is configured to: allow a connecting member (31) of the slide rail (30) to pass through, and enable the connecting member (31) to abut against the first toothed portion (112).

## Description

### CROSS-REFERENCE TO RELATED APPLICATIONS

This application claims priority and benefit in Patent Application No. 202322624196.9, filed with the China National Intellectual Property Administration on September 26, 2023, which is incorporated herein by reference in its entirety.

### TECHNICAL FIELD

This application relates to the technical field of seat components, and in particular, to an elastic locking piece, a slide rail assembly, a seat, and a vehicle.

### BACKGROUND

The slide rail of a seat is a core connecting mechanical component that connects the seat to a vehicle body floor. Its main functions include adjusting a position of the seat in a front-and-rear direction and providing an interface for the seat belt, to meet user requirements for sitting comfort, passenger safety, and the like. The locking apparatus of the slide rail of the seat must ensure the safety of the seat, especially during accidents such as vehicle collisions in which the seat is subjected to large inertial forces.

### SUMMARY

This application provides an elastic locking piece, a slide rail assembly, a seat, and a vehicle, to solve at least one of the foregoing technical problems.

An elastic locking piece in this application is applied to a slide rail, wherein the elastic locking piece is provided with a connection hole, a first toothed portion is disposed at an inner wall of the connection hole, the first toothed portion includes at least one tooth, and the at least one tooth of the first toothed portion protrudes from the inner wall of the connection hole; and
the connection hole is configured to: allow a connecting member of the slide rail to pass through, and enable the connecting member to abut against the first toothed portion.

In the elastic locking piece, by disposing the first toothed portion in the connection hole, the connecting member may interact with the tooth of the first toothed portion during assembly. This improves a limiting effect of the connecting member on the elastic locking piece, preventing the elastic locking piece from shifting and rotating, thereby improving safety and stability of the elastic locking piece during movement relative to the slide rail.

In some implementations, the first toothed portion includes at least two teeth, and the at least two teeth of the first toothed portion are arranged on the inner wall of the connection hole in a circumferential direction of the connection hole. In this way, abutting strength of the connecting member against the inner wall of the connection hole can be improved.

In some implementations, the inner wall of the connection hole includes a first flat surface, the first flat surface extends along a length direction of the elastic locking piece, and the at least one tooth of the first toothed portion protrudes from the first flat surface. In this way, vibrating of the elastic locking piece during movement in the length direction can be reduced.

In some implementations, the inner wall of the connection hole includes a second flat surface opposite to the first flat surface, and the at least one tooth is disposed on both the first flat surface and the second flat surface. In this way, an effect of reducing vibrating amplitude of the elastic locking piece can be improved.

In some implementations, the connection hole is a kidney-shaped hole, and two opposite inner side walls of the kidney-shaped hole are respectively formed as the first flat surface and the second flat surface. In this way, the kidney-shaped hole can be easily manufactured due to its simple processing technology.

In some implementations, the connecting member is disposed at a first slideway of the slide rail, to restrictively connect the elastic locking piece to the slide rail.

In some implementations, at least a portion of the connecting member is configured to elastically deform when abutting against the first toothed portion. In this way, a gap between the teeth of the first toothed portion can be filled when the connecting member is elastically deformed, thereby improving the limiting effect of the connecting member on the elastic locking piece.

A slide rail assembly in this application includes:
the elastic locking piece according to any one of the foregoing implementations;
a slide rail, the slide rail including a first slideway; and
a connecting member disposed on the first slideway, the connecting member passing through the connection hole, and the connecting member abutting against the first toothed portion.

In the elastic locking piece, by disposing the first toothed portion in the connection hole, the connecting member may interact with the tooth of the first toothed portion during assembly. This can improve the limiting effect of the connecting member on the elastic locking piece, preventing the elastic locking piece from shifting and rotating, thereby improving safety and stability of the elastic locking piece during movement relative to the slide rail.

In some implementations, the slide rail is provided with a fastening hole, and the connecting member passes through the fastening hole and the connection hole, to restrictively connect the elastic locking piece to the slide rail.

In some implementations, an extension length of the connection hole in a length direction of the elastic locking piece is greater than an extension length of the fastening hole in the length direction of the elastic locking piece. In this way, the connection hole can accommodate a tolerance in a movement direction of the elastic locking piece during assembly.

In some other implementations, the slide rail assembly includes:
a snap-fit portion, an end of the elastic locking piece forming the snap-fit portion, and the snap-fit portion including a tab; and
an operating handle, the operating handle including a handle end and a notch, and the operating handle passing through and being connected to the elastic locking piece via the handle end; and
the snap-fit portion being configured to elastically abut against the notch of the operating handle via the tab, to restrict movement of the handle end in a direction in which the handle end passes through the elastic locking piece. In this way, a position shift of the operating handle in a passing-through direction can be reduced.

In some implementations, the snap-fit portion includes an arc-shaped arm, a first straight arm, and a second straight arm, the arc-shaped arm bends and extends from the elastic locking piece, and the arc-shaped arm, the first straight arm, the second straight arm, and the tab are sequentially connected to form a bent structure.

In some implementations, the first straight arm, the second straight arm, and the tab are disposed in the same plane;
the elastic locking piece includes a fastening portion, the fastening portion is provided with the connection hole, and the arc-shaped arm is connected to the fastening portion; and
the elastic locking piece is configured such that an angle formed by the first flat surface and the second flat surface ranges from 10° to 30°, the first flat surface is a plane in which the first straight arm, the second straight arm, and the tab are disposed, and the second flat surface is a plane in which the fastening portion is disposed. In this way, snap-fit fastening effect of the snap-fit portion can be ensured.

A seat in this application includes:
a seat body; and
the slide rail assembly according to any one of the foregoing implementations, and the seat body being fastened to the first slideway.

In the seat, by disposing the first toothed portion in the connection hole, the connecting member may interact with the tooth of the first toothed portion during assembly. This can improve the limiting effect of the connecting member on the elastic locking piece, preventing the elastic locking piece from shifting and rotating, thereby improving safety and stability of the elastic locking piece during movement relative to the slide rail.

A vehicle in this application includes:
the seat according to the foregoing implementations, or the slide rail assembly according to any one of the foregoing implementations.

In the vehicle, by disposing the first toothed portion in the connection hole, the connecting member may interact with the tooth of the first toothed portion during assembly. This can improve the limiting effect of the connecting member on the elastic locking piece, preventing the elastic locking piece from shifting and rotating, thereby improving safety and stability of the elastic locking piece during movement relative to the slide rail.

Additional aspects and advantages of this application are in part described in the following descriptions and in part become apparent in the following descriptions or are learned through practice of this application.

### BRIEF DESCRIPTION OF DRAWINGS

The foregoing and/or additional aspects and advantages of this application are clear and easily understood in descriptions of implementations with reference to the accompanying drawings.
FIG. 1 is a schematic diagram of a structure of an elastic locking piece according to an implementation of this application;
FIG. 2 is a schematic diagram of another structure of an elastic locking piece according to an implementation of this application;
FIG. 3 is a schematic diagram of a structure of an operating handle according to an implementation of this application;
FIG. 4 is a schematic diagram of a partial structure of a slide rail according to an implementation of this application;
FIG. 5 is a schematic diagram of a structure of one part of a slide rail assembly according to an implementation of this application;
FIG. 6 is a schematic diagram of a structure of the other part of a slide rail assembly according to an implementation of this application;
FIG. 7 is a schematic diagram of a partial structure of a seat according to an implementation of this application;
FIG. 8 is a schematic diagram of a structure of one part of a vehicle according to an implementation of this application; and
FIG. 9 is a schematic diagram of a structure of the other part of a vehicle according to an implementation of this application.

### Reference numerals:

100: slide rail assembly;
10: elastic locking piece; 11: fastening portion; 111: connection hole; 1110: inner wall; 1111: first flat surface; 1112: second flat surface; 112: first toothed portion; 1121: tooth;
12: first bending portion; 122: first opening; 123: tongue-shaped member;
13: locking portion; 131: second toothed portion;
14: snap-fit portion; 140: bent structure; 141: arc-shaped arm; 142: first straight arm; 143: second straight arm; 144: tab; 145: third straight arm;
15: second bending portion; 151: bending transition section; 152: bending member;
16: silencing member;
20: operating handle; 21: handle end; 22: end portion transition section; 23: notch; 24: operating portion;
30: slide rail; 31: connecting member;
40: first slideway; 42: toothed window; 43: stroke limiting member; 44: second opening; 45: fastening hole; 46: elastic limiting member;
50: second slideway; 51: toothed groove;
200: seat; 210: seat body;
300: vehicle.

### DESCRIPTION OF EMBODIMENTS

In the description of this application, partial content disclosed is illustrated in the accompanying drawings. Same or similar reference numerals throughout indicate same or similar elements or elements having same or similar functions. Content described below with reference to the accompanying drawings is an example and is merely used to explain this application, and shall not be construed as a limitation on this application.

The description of this application discloses many different types of content or examples to implement different structures of this application. In order to simplify the disclosure of this application, components and arrangements of a specific example are described below. Certainly, the components and arrangements are merely examples, and are not intended to limit this application.

In addition, numbers and/or letters are repeatedly referenced in different examples of this application. This repetition is for the purpose of simplicity and clarity and does not indicate a relationship between various implementations and/or disposition discussed.

The slide rail of a seat is a core connecting component that connects the seat to a vehicle body floor. Its main functions include adjusting a position of the seat in a front-and-rear direction and providing an interface for the seat belt, to meet user requirements for sitting comfort, passenger safety, and the like. The locking apparatus of the slide rail of the seat must ensure the safety of the seat, especially during accidents such as vehicle collisions in which the seat is subjected to large inertial forces.

In the related technologies, a basic principle of a manual slide rail of the seat is that a locking tooth is disposed between a toothed window of a first slideway and a toothed groove of a second slideway of a slide rail, and in a locked state, the locking tooth restricts movement of the first slideway and the second slideway. By pulling an operating handle, an elastic locking piece mounted inside the slide rail is driven to rotate, thereby driving the locking tooth at a handle end of the elastic locking piece to move toward an unlocking direction, so that the locking tooth separates from the toothed groove of the second slideway, thereby unlocking the second slideway. When the operating handle is released, the operating handle is reset under the action of an elastic force of the elastic locking piece, and the locking tooth on the elastic locking piece returns to a locking position again, thereby restricting the relative movement between the first slideway and the second slideway. The elastic locking piece needs to ensure locking reliability between the first slideway and the second slideway, to eliminate a gap between the first slideway and the second slideway, and also needs to ensure that no friction-induced noise and chattering noise are produced during movement in an unlocking process and a locking process of components such as the operating handle and the elastic locking piece.

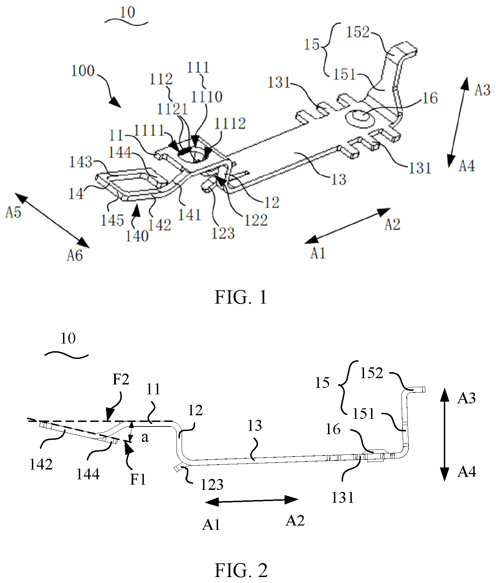

Referring to FIG. 1 and FIG. 2, a slide rail assembly 100 provided in an implementation of this application may include an elastic locking piece 10. The elastic locking piece 10 may include at least one of a fastening portion 11, a first bending portion 12, and a locking portion 13. The elastic locking piece 10 may be restrictively connected to a first assembly via the fastening portion 11. The elastic locking piece 10 may implement locking effect and unlocking effect of the elastic locking piece 10 on the first assembly via the locking portion 13. The elastic locking piece 10 may be restrictively connected to a second assembly via the first bending portion 12. The first assembly and the second assembly are different structures other than the elastic locking piece 10.

In FIG. 1 and FIG. 2, a direction A1 and a direction A2 may both represent a length direction of the elastic locking piece 10, a direction A3 and a direction A4 may both represent a height direction of the elastic locking piece 10, and a direction A5 and a direction A6 may both represent a width direction of the elastic locking piece 10.

In FIG. 1 and FIG. 2, the fastening portion 11 may be located on a side of the elastic locking piece 10 close to the direction A1. On the elastic locking piece 10, the fastening portion 11 tends to be closer to the direction A3 relative to the direction A4.

The fastening portion 11 may be of a generally plate-shaped structure. The fastening portion 11 may be provided with a connection hole 111. The connection hole 111 may be provided in the plate-shaped structure of the fastening portion 11. The connection hole 111 may be of a kidney-shaped hole structure. In other words, because a diameter of the connection hole 111 is non-uniform, a diameter of the connection hole 111 in a specific direction is larger than a diameter of the connection hole 111 in another direction. In FIG. 1, the connection hole 111 may form extension lengths in the direction A1 and the direction A2.

The first assembly may include a fastening hole 45. A restrictive connection between the elastic locking piece 10 and the first assembly may be implemented via a restrictive connection between the connection hole 111 and the fastening hole 45. Specifically, the connection hole 111 and the fastening hole 45 may be passed through and connected via a corresponding structure. Due to an extension length of the connection hole 111, although the fastening portion 11 is restricted by the corresponding structure, the fastening portion 11 may still move relative to the first assembly in the direction A1 and the direction A2. A corresponding structure passing through the connection hole 111 and the fastening hole 45 may be a rivet. In other words, the first assembly and the elastic locking piece 10 may be restrictively connected by riveting.

On the basis of the foregoing description of the connection hole 111, when the elastic locking piece 10 is assembled to the first assembly, the connection hole 111 may adapt to impact of a tolerance (for example, a tolerance of a structure, or a tolerance caused by a minor difference of an assembly position) based on the extension length of the connection hole 111, to achieve effect of eliminating the impact of the tolerance.

The fastening portion 11 may include a first toothed portion 112. In FIG. 1, the first toothed portion 112 may be disposed on a side wall extending along the direction A1 and the direction A2 within the connection hole 111. The side wall extending along the direction A1 and the direction A2 within the connection hole 111 may be located on a side of the connection hole 111 in the direction A5 and/or a side of the connection hole 111 in the direction A6. A side wall of the connection hole 111 may be expressed as an inner wall 1110 of the connection hole 111. The side wall extending along the direction A1 and the direction A2 within the connection hole 111 may be a straight and flat surface.

The first toothed portion 112 may be provided with at least one tooth 1121. The tooth 1121 of the first toothed portion 112 may extend along the direction A3 and the direction A4. When the first toothed portion 112 is provided with a plurality of teeth 1121, the plurality of teeth 1121 of the first toothed portion 112 may be sequentially arranged in the direction A1 and the direction A2. The tooth 1121 of the first toothed portion 112 may be a protrusion formed on the inner wall 1110 of the connection hole 111.

On the basis of the foregoing description of the first toothed portion 112, when the fastening portion 11 needs to move relative to the first assembly, the fastening portion 11 moves in the direction A1 and the direction A2 relative to a corresponding structure passing through the connection hole 111, and in the moving process, the fastening portion 11 abuts, via the side wall, provided with the first toothed portion 112, of the connection hole 111, against the corresponding structure passing through the connection hole 111.

Because the tooth 1121 of the first toothed portion 112 relatively protrudes from the inner wall 1110 of the connection hole 111, the corresponding structure passing through the connection hole 111 is more easily in contact with the tooth 1121 of the first toothed portion 112 inside the connection hole 111, to generate a frictional force, thereby restricting movement of the elastic locking piece 10 in a manner of generating a frictional force. In some cases, the corresponding structure passing through the connection hole 111 may be plastically deformed after being pressed, causing material flow, and deformation produced may fit with the tooth 1121 of the first toothed portion 112, thereby filling a gap around the tooth 1121 of the first toothed portion 112. This increases a contact area between the corresponding structure passing through the connection hole 111 and the inner wall 1110 of the connection hole 111, and enables an effect of increased force interaction between the corresponding structure passing through the connection hole 111 and the inner wall 1110 of the connection hole 111 to be more obvious, thereby restricting the movement of the elastic locking piece 10.

After the elastic locking piece 10 is assembled to the first assembly, position shift of the elastic locking piece 10 can be reduced, thereby improving smooth effect of the elastic locking piece 10 in the moving process, and finally reducing the movement and rotation of the elastic locking piece 10 in the moving process. The position shift of the elastic locking piece 10 may include movement of the elastic locking piece 10 in the direction A1 or the direction A2, or may include a rotation of the elastic locking piece 10 in the direction A1 or the direction A2.

In addition, the fastening portion 11 may be of a plate-shaped structure that is substantially square, circular, elliptical, or kidney-shaped.

In FIG. 1 and FIG. 2, the first bending portion 12 may be connected to an end of the fastening portion 11 close to the direction A2. The first bending portion 12 may extend from the fastening portion 11 toward the direction A4, enabling the first bending portion 12 to be in a bent state relative to the fastening portion 11.

The first bending portion 12 may be provided with a first opening 122. The first opening 122 may be provided at a middle position of the first bending portion 12 in the direction A5 and the direction A6. The first opening 122 may be provided in the direction A1 and the direction A2. The first opening 122 may allow the second assembly to pass through, to restrictively connect the first bending portion 12.

The first bending portion 12 may include a tongue-shaped member 123. The tongue-shaped member 123 may be of a structure extending outward relative to another structure of the first bending portion 12. In FIG. 1 and FIG. 2, the tongue-shaped member 123 may be located on a side of the elastic locking piece 10 close to the direction A4. The direction A4 may be a direction of a bottom of the elastic locking piece 10. The tongue-shaped member 123 may have an elastic force. When the elastic locking piece 10 is restrictively connected to the second assembly via the first bending portion 12, the elastic locking piece 10 may abut against the second assembly through an elastic force via the tongue-shaped member 123 at a bottom of the second assembly, so that the second assembly can be clamped in the first opening 122. This improves abutting and fastening effect of the first bending portion 12 on the second assembly.

In FIG. 1 and FIG. 2, the locking portion 13 may be connected to an end of the first bending portion 12 close to the direction A4. The locking portion 13 may extend from the first bending portion 12 along the direction A2, enabling the first bending portion 12 to be in a bent state relative to the locking portion 13.

The locking portion 13 may include a second toothed portion 131. The second toothed portion 131 may be located on a side of the locking portion 13 close to the direction A2. The second toothed portion 131 may include at least two teeth 1121. The teeth 1121 of the second toothed portion 131 may be spaced apart on a side of the locking portion 13 facing the direction A5 and/or the direction A6.

The elastic locking piece 10 may rotate in the direction A5 and the direction A6, enabling the teeth 1121 of the second toothed portion 131 to move to different positions. The first assembly may be provided with a toothed groove 51.

When the elastic locking piece 10 rotates in the direction A1 and the direction A2, the teeth 1121 of the second toothed portion 131 may rotate into the toothed groove 51 of the first assembly, to implement mutual restriction between the first assembly and the elastic locking piece 10 via the toothed groove 51 of the first assembly and the teeth 1121 of the second toothed portion 131, thereby achieving effect that the elastic locking piece 10 locks the first assembly.

When the elastic locking piece 10 rotates in the direction A1 and the direction A2, the teeth 1121 of the second toothed portion 131 may be rotated out of the toothed groove 51 of the first assembly, to release mutual restriction between the first assembly and the elastic locking piece 10 via the toothed groove 51 of the first assembly and the teeth 1121 of the second toothed portion 131, thereby achieving effect that the elastic locking piece 10 unlocks the first assembly.

The second toothed portion 131 may be integrally formed on the elastic locking piece 10, to improve a degree of integration between different structures, and improve structural strength of the second toothed portion 131.

In FIG. 1 and FIG. 2, the elastic locking piece 10 may include a snap-fit portion 14. The snap-fit portion 14 may be located on a side of the elastic locking piece 10 close to the direction A1. The snap-fit portion 14 may extend from the fastening portion 11 along the direction A1.

In FIG. 1 and FIG. 2, the snap-fit portion 14 may include an arc-shaped arm 141, a first straight arm 142, a second straight arm 143, and a tab 144. One end of the arc-shaped arm 141 may be connected to the fastening portion 11. The other end of the arc-shaped arm 141 may be connected to the first straight arm 142. The first straight arm 142 may be connected to the second straight arm 143, enabling an extension direction of the first straight arm 142 to be parallel to an extension direction of the second straight arm 143. The extension direction of the first straight arm 142 may be parallel to the direction A1 and the direction A2. The extension direction of the second straight arm 143 may be parallel to the direction A1 and the direction A2. The tab 144 may be connected to an end of the second straight arm 143.

In FIG. 1 and FIG. 2, the snap-fit portion 14 may include a third straight arm 145. The first straight arm 142 may be connected to the second straight arm 143 via the third straight arm 145. The first straight arm 142, the second straight arm 143, the third straight arm 145, and the tab 144 may be disposed in a same plane. Different structures being disposed in a same plane may be that extension directions of the respective structures are disposed in a same plane.

In some cases, the first straight arm 142, the second straight arm 143, and the tab 144 are disposed in a same plane. When the tab 144 is subjected to a force, the force applied to the tab 144 can be uniformly conducted to the first straight arm 142 and the second straight arm 143, to increase a force threshold of the snap-fit portion 14 and improve structural strength of the snap-fit portion 14.

In FIG. 2, the plane in which the first straight arm 142, the second straight arm 143, and the tab 144 are disposed may be represented as F1. A plane in which a fastener is disposed due to a plate-shaped structure of the fastener may be represented as F2. An angle formed by the plane F1 and the plane F2 may be represented as a.

The snap-fit portion 14 may be configured to fasten a corresponding structure in a clamping and abutting manner. In FIG. 1 and FIG. 2, the tab 144 may be located at a position close to the first opening 122. When the corresponding structure needs to pass through the first opening 122, the corresponding structure may need to push off the tab 144, to provide space allowing for passing through the first opening 122. Because the arc-shaped arm 141, the first straight arm 142, the second straight arm 143, and the tab 144 are structurally matched to generate an elastic force, after the corresponding structure passes through the first opening 122, the tab 144 may abut against a surface of the corresponding structure through the elastic force, so that the snap-fit portion 14 can be clamped via the tab 144 and abut against the corresponding structure passing through the first opening 122, thereby achieving snap-fit fastening effect of the snap-fit portion 14.

A value range of the angle a may be between 10° and 30°. A change in the angle a may affect snap-fit effect of a snap-fit member. It will be understood that if the angle a is excessively small, the first straight arm 142, the second straight arm 143, and the tab 144, as a whole, are closer to the plane F2, and when abutting and fastening effect is achieved via the tab 144, because the tab 144 does not protrude significantly, abutment may be unstable. As a result, abutting and fastening effect is reduced. If the angle a is excessively large, the first straight arm 142, the second straight arm 143, and the tab 144, as a whole, are further away from the plane F2, and when abutting and fastening effect is achieved via the tab 144, because the tab 144 protrudes significantly, a corresponding structure that needs to be abutted against cannot reach a position at which the corresponding structure is abutted against via the tab 144. As a result, abutting and fastening effect cannot be achieved.

In addition, the first straight arm 142, the second straight arm 143, and the tab 144 being disposed in a same plane is conducive to structural forming of the snap-fit member.

In FIG. 1 and FIG. 2, the elastic locking piece 10 may include a second bending portion 15. The second bending portion 15 may be connected to the side of the locking portion 13 close to the direction A2. The second bending portion 15, as a whole, may extend along the direction A3 relative to the locking portion 13, enabling the second bending portion 15 to be in a bent state relative to the locking portion 13.

In FIG. 1 and FIG. 2, the second bending portion 15 may include a bending transition section 151. In the direction A3, a cross-sectional dimension of the bending transition section 151 is gradually reduced. In other words, side surfaces of the bending transition section 151 in the direction A5 and the direction A6 are obliquely disposed respectively, so that the two side surfaces tend to be close to each other in the direction A3.

In FIG. 1 and FIG. 2, the second bending portion 15 may include a bending member 152. The bending member 152 may be connected to a side of the bending transition section 151 close to the direction A3. The bending member 152, as a whole, may extend from the bending transition section 151 along a direction away from the bending transition section 151. A portion of the bending member 152 close to the bending transition section 151 may extend in the direction A3, and a portion of the bending member 152 away from the bending transition section 151 may extend along the direction A2, enabling the bending member 152 to be in a bent state.

In FIG. 1 and FIG. 2, the elastic locking piece 10 may include a silencing member 16. The silencing member 16 may be disposed on a side of the locking portion 13 close to the direction A2. When the corresponding structure abuts against the silencing member 16, the silencing member 16 can cancel out vibration or noise generated during movement of the corresponding structure, so that the corresponding structure moves relative to the movement of the elastic locking piece 10 more silently.

The silencing member 16 may be of a circular structure. This improves effect of uniform force bearing.

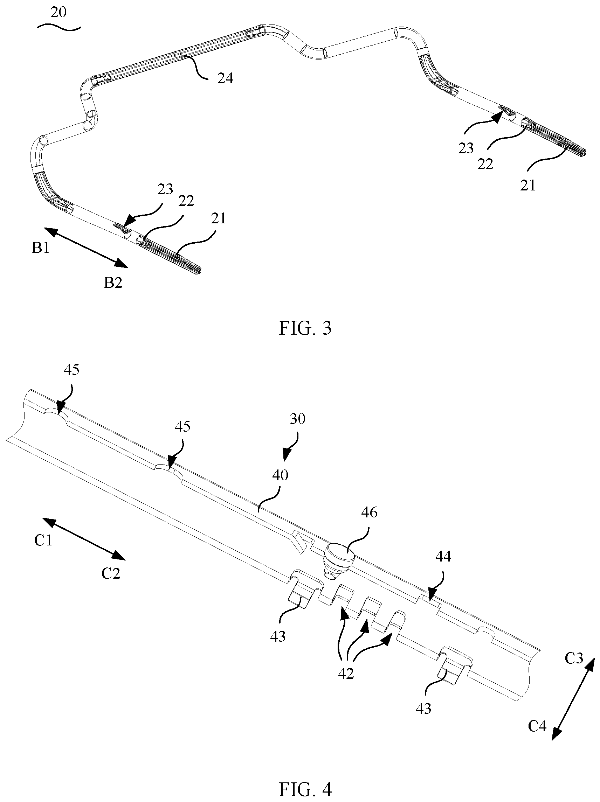

Referring to FIG. 3, the slide rail assembly 100 in this application may include an operating handle 20. The operating handle 20 may include a handle end 21, an end portion transition section 22, and a notch 23. The handle end 21 may be located at an end portion of the operating handle 20. The end portion transition section 22 may be adjacently connected to the handle end 21. In an extension direction of the end portion of the operating handle 20, there may be a variation and a transition in a cross-sectional dimension of the end portion transition section 22. In some cases, the variation and the transition in the cross-sectional dimension of the end portion transition section 22 may include a transition from a circular cross-section to a square cross-section. In FIG. 3, a direction B1 and a direction B2 may represent the extension direction of the end portion of the operating handle 20.

In FIG. 3, the operating handle 20 may generally be of a U-shaped structure. In other words, two sides of the operating handle 20 are provided with end portions respectively, and the end portions on the two sides may be mirror-symmetrical on the operating handle 20.

The operating handle 20 may include an operating portion 24. The operating portion 24 may be disposed in a middle portion between the two end portions of the operating handle 20. The user may hold the operating portion 24, to drive the end portion of the operating handle 20 to move in the direction B1 and the direction B2.

Based on the foregoing description, the operating handle 20 in this application may be the second assembly. The operating handle 20 may interact with the elastic locking piece 10 via the handle end 21, the end portion transition section 22, and the notch 23 separately, enabling the operating handle 20 to be restrictively connected to the elastic locking piece 10.

Specifically, the operating handle 20 may pass through the first opening 122 of the first bending portion 12 via the handle end 21. When the handle end 21 abuts against a position at which the silencing member 16 is located, the end portion transition section 22 may abut against a side wall of the first opening 122, and the notch 23 may abut against the tab 144 of the snap-fit portion 14, thereby limiting space for movement of the operating handle 20 in a direction in which the operating handle 20 passes through the first opening 122, and completing assembly of the operating handle 20.

After assembly of the operating handle 20 is completed, the tab 144 may provide a specific rebound force for the movement of the operating handle 20, so that stress on the overall structure of the operating handle 20 after assembly is more stable. The tab 144 and the silencing member 16 may be respectively located on two sides of the elastic locking piece 10, to better balance stress on the operating handle 20 after the operating handle 20 is assembled to the elastic locking piece 10.

Referring to FIG. 4 to FIG. 6, the slide rail assembly 100 in this application may include a slide rail 30. The elastic locking piece 10 may be restrictively connected to the slide rail 30, enabling the elastic locking piece 10 and the slide rail 30 to be connected into a whole. When the elastic locking piece 10 is driven to move, the slide rail 30 may also be driven to move.

In FIG. 4 to FIG. 6, a direction C1 and a direction C2 may represent a length direction of the slide rail 30, a direction C3 and a direction C4 may represent a height direction of the slide rail 30, and a direction C5 and a direction C6 may represent a width direction of the slide rail 30.

The operating handle 20 in this application may be restrictively connected to the elastic locking piece 10. The user may operate the operating handle 20, to drive the slide rail 30 to correspondingly move in a movement direction of the handle end 21 of the operating handle 20.

The slide rail 30 may be fastened to a to-be-adjusted object, enabling the to-be-adjusted object to be driven to move. The to-be-adjusted object may include a seat. In other words, the elastic locking piece 10, the operating handle 20, and the slide rail 30 in this application may cooperatively drive the seat to move, to achieve effect of adjusting a position of the seat. The seat may be a car seat.

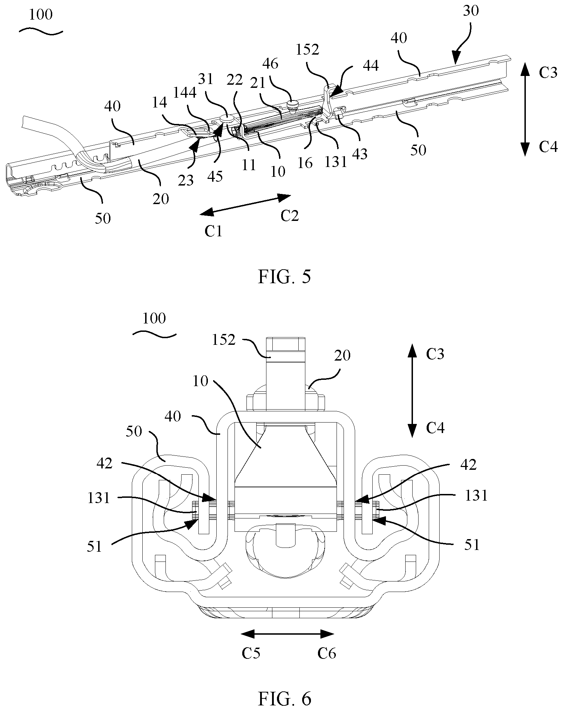

In FIG. 4 to FIG. 6, the slide rail 30 may include a first slideway 40. The first slideway 40 may be formed by extending along the direction C1 and the direction C2. The first slideway 40 may be of a semi-enclosed structure. The elastic locking piece 10 may be confined in space defined by the first slideway 40 in an enclosing manner. Two sides of the first slideway 40 in the direction C5 and the direction C6 may be of a structure that is bent outward, respectively. In the direction C1 and the direction C2, a structure of the first slideway 40 may be approximately in an "Ω" shape, that is, the first slideway 40 shown in FIG. 6.

In FIG. 4 to FIG. 6, the first slideway 40 may be provided with a toothed window 42. In FIG. 6, the toothed window 42 may be provided on a side surface of the first slideway 40 in the direction C5 and/or a side surface of the first slideway 40 in the direction C6. In FIG. 4, the toothed window 42 may be of a hole-shaped structure. A folded structure may be formed on the side surface of the first slideway 40 in the direction C5 and/or the side surface of the first slideway 40 in the direction C6. The toothed window 42 may be formed on the folded structure of the first slideway 40, enabling another structure to enter the toothed window 42 from different directions.

The side surface of the first slideway 40 may be provided with at least two toothed windows 42 that are sequentially spaced apart. The toothed window 42 may correspond to the second toothed portion 131 of the locking portion 13. In other words, the teeth 1121 of the second toothed portion 131 may movably enter one corresponding toothed window 42. Therefore, the effect of mutual restriction and transmission between the elastic locking piece 10 and the first slideway 40 can be implemented via a fit between the second toothed portion 131 and the toothed window 42. On the basis of a fit between the connection hole 111 and the first toothed portion 112, a relative position between the second toothed portion 131 and the toothed window 42 can be accurately positioned.

In some cases, the first assembly may be the slide rail 30, and the second assembly may be the operating handle 20. The operating handle 20 may be restrictively connected to the elastic locking piece 10 via a portion of the structure, and the elastic locking piece 10 may be clamped into the toothed window 42 of the first slideway 40 via the second toothed portion 131, so that the first slideway 40 can be driven by the operating handle 20 to move.

In FIG. 4 to FIG. 6, the slide rail 30 may include stroke limiting members 43. In FIG. 4, the stroke limiting members 43 may be disposed on a side of the first slideway 40 in the direction C4. One of the stroke limiting members 43 may be disposed on a side of each toothed window 42 close to the direction C1, and the other one of the stroke limiting members 43 may be disposed on a side of each toothed window 42 close to the direction C2. When the first slideway 40 moves relatively, a moving stroke of the first slideway 40 in the direction C1 or the direction C2 may be separately limited via the two stroke limiting members 43.

In FIG. 4 to FIG. 6, the first slideway 40 may be provided with a second opening 44. The second opening 44 may be provided on a side of the first slideway 40 in the direction C3. When the elastic locking piece 10 is restricted in the first slideway 40, the bending member 152 of the second bending portion 15 of the elastic locking piece 10 may extend out of the second opening 44 from the first slideway 40, enabling the bending member 152 to abut against or drive another structure on the outside of the first slideway 40.

In FIG. 4 to FIG. 6, the first slideway 40 may be provided with a fastening hole 45. The fastening hole 45 may be provided on the side of the first slideway 40 in the direction C3. The fastening hole 45 may be fitted with the connection hole 111 of the fastening portion 11 of the elastic locking piece 10. Specifically, the fastening hole 45 and the connection hole 111 may be jointly passed through for implementing restriction. Based on the foregoing description of the connection hole 111, a structure passing through the connection hole 111 may move relative to the side wall of the connection hole 111, enabling the elastic locking piece 10 to move relative to the first slideway 40.

In FIG. 4 to FIG. 6, a different portion of the first slideway 40 may be provided with the fastening hole 45, to adapt to an elastic locking piece 10 of a different size.

In FIG. 4 to FIG. 6, the slide rail 30 may include an elastic limiting member 46. The elastic limiting member 46 may be disposed on the side of the first slideway 40 in the direction C3. When the corresponding structure is restricted in the first slideway 40, the elastic limiting member 46 may abut against the corresponding structure, and may apply an acting force on the corresponding structure through an elastic force of the elastic limiting member 46, enabling the elastic limiting member 46 to have a limiting function.

Referring to FIG. 5, in FIG. 5, the elastic locking piece 10 may be disposed inside the first slideway 40, and the operating handle 20 may pass through the first opening 122 of the elastic locking piece 10, enabling the operating end to be located between the silencing member 16 and the elastic limiting member 46. When the operating handle 20 moves relative to the elastic locking piece 10, the elastic limiting member 46 may abut, on one side of the operating end, against the operating end, enabling the other side of the operating end to be attached to the silencing member 16. The silencing member 16 can cancel vibration or noise generated when the operating end moves, enabling the elastic locking piece 10 and the slide rail 30 to cooperatively reduce the vibration or noise generated by the operating handle 20.

In addition, a fit between the silencing member 16 and the elastic limiting member 46 may alternatively restrict rotational movement of the handle end 21.

In addition, in FIG. 5, the slide rail 30 may include a connecting member 31. Passing through both the fastening hole 45 and the connection hole 111 may be implemented via the connecting member 31.

Referring to FIG. 5 and FIG. 6, the slide rail 30 in this application may include a second slideway 50. The second slideway 50 may slide relative to the first slideway 40, to fit with the first slideway 40 to form a slide rail 30 structure.

In FIG. 5 and FIG. 6, the direction C1 and the direction C2 may represent a length direction of the second slideway 50, the direction C3 and the direction C4 may represent a height direction of the second slideway 50, and the direction C5 and the direction C6 may represent a width direction of the second slideway 50.

In FIG. 5 and FIG. 6, the second slideway 50 may be formed by extending along the direction C1 and the direction C2. Two sides of the second slideway 50 in the direction C5 and the direction C6 may be close to each other, enabling the second slideway 50 to be of a semi-enclosed structure. The two sides of the second slideway 50 in the direction C5 and the direction C6 may be of a structure that is bent inward, respectively. In the direction C1 and the direction C2, a structure of the second slideway 50 may be approximately in a "ω" shape, that is, a shape of the second slideway 50 shown in FIG. 6.

In some cases, the first assembly may be the slide rail 30, and the second assembly may be the operating handle 20. The first slideway 40 and the second slideway 50 may enclose each other, and the operating handle 20 may pass, via a portion of a structure, through space formed through mutual enclosure of the first slideway 40 and the second slideway 50.

In FIG. 5 and FIG. 6, the second slideway 50 may be provided with a toothed groove 51. The toothed groove 51 may be provided at an end portion of the second slideway 50. The second slideway 50 may form the end portion of the second slideway 50 at an extended end of the inwardly-bent structure of the second slideway 50. In FIG. 6, the end portion of the second slideway 50 may be close to semi-enclosed space of the second slideway 50. In other words, the end portion of the second slideway 50 may be located on an inner side of the second slideway 50.

In FIG. 6, the first slideway 40 and the second slideway 50 may be fitted with each other, enabling the toothed window 42 of the first slideway 40 to match the toothed groove 51 of the second slideway 50. When the elastic locking piece 10 is restrictively connected to the second slideway 50, the teeth 1121 of the second toothed portion 131 of the elastic locking piece 10 may successively pass through the toothed window 42 of the first slideway 40 and the toothed groove 51 of the second slideway 50, enabling the first slideway 40 and the second slideway 50 to be locked via the second toothed portion 131, thereby achieving locking effect on the first slideway 40.

FIG. 6 shows a case in which the slide rail 30 is in a locked state. The elastic locking piece 10 may be driven to move, enabling the teeth 1121 of the second toothed portion 131 to move out of the toothed groove 51, thereby enabling the first slideway 40 and the second slideway 50 to be unlocked and move relative to each other. The relative movement between the first slideway 40 and the second slideway 50 may correspond to a case in which the slide rail 30 is in an unlocked state.

Based on the foregoing description, the elastic locking piece 10, the operating handle 20, and the slide rail 30 in this application may be fitted with each other, to implement locking and unlocking functions of the slide rail 30.

Referring to FIG. 5, in some cases, the user may operate the operating handle 20, to drive the handle end 21 to move toward the direction C4. Because the handle end 21 abuts against the silencing member 16, the handle end 21 may drive a portion of the locking portion 13 close to the silencing member 16 to move toward the direction C4. Because the second toothed portion 131 is close to the silencing member 16, the second toothed portion 131 may move toward the direction C4. Before movement, the second toothed portion 131 is in a status of extending into the toothed window 42 and the toothed groove 51, and after movement, the second toothed portion 131 moves out of the toothed groove 51, enabling the first slideway 40 and a downward slide to move relative to each other.

In other words, when the handle end 21 moves toward the direction C4, the first slideway 40 and the second slideway 50 may be unlocked; and when the handle end 21 moves toward the direction C3, the first slideway 40 and the second slideway 50 may be locked.

When the first slideway 40 and the second slideway 50 are unlocked, the user may operate the operating handle 20 again, to drive the handle end 21 to move toward the direction C1 or the direction C2. Because the operating handle 20 is restrictively connected to the elastic locking piece 10, and the elastic locking piece 10 is restrictively connected to the first slideway 40, the first slideway 40 may be driven to move toward the direction C1 or the direction C2. When the first slideway 40 is fastened to the to-be-adjusted object, the to-be-adjusted object may be driven to move in the direction C1 or the direction C2 via the first slideway 40.

When the first slideway 40 and the second slideway 50 need to be locked, the bending member 152 may be pulled to move in the direction A3, to drive the second toothed portion 131 to move toward the direction A3 and extend into the toothed window 42 of the first slideway 40 and the toothed groove 51 of the second slideway 50, thereby locking the first slideway 40 and the second slideway 50.

In addition, with reference to the foregoing description, the technical concept of this application may be further implemented in the following manners.

Referring to FIG. 1, FIG. 2, and FIG. 4, the elastic locking piece 10 in this application may be applied to the slide rail 30. The elastic locking piece 10 may be provided with the connection hole 111. The first toothed portion 112 may be disposed at the inner wall 1110 of the connection hole 111. The first toothed portion 112 may include the at least one tooth 1121. The tooth 1121 of the first toothed portion 112 may protrude from the inner wall 1110 of the connection hole 111. The connection hole 111 is configured to: allow a connecting member 31 of the slide rail 30 to pass through, and enable the connecting member 31 to abut against the first toothed portion 112.

In the elastic locking piece 10, by disposing the first toothed portion 112 in the connection hole 111, the connecting member 31 may interact with the tooth 1121 of the first toothed portion 112 during assembly. This improves limiting effect of the connecting member 111 on the elastic locking piece 10, preventing the elastic locking piece 10 from shifting and rotating, thereby improving safety and stability of the elastic locking piece 10 during movement relative to the slide rail 30.

Referring to FIG. 1, the connecting member 31 may pass through the first slideway 40 of the slide rail 30, to restrictively connect the elastic locking piece 10 to the slide rail 30.

Referring to FIG. 1, at least a portion of the connecting member 31 is configured to elastically deform when abutting against the first toothed portion 112. In this way, the gap around the teeth 1121 of the first toothed portion 112 can be filled through elastic deformation of the connecting member 31, thereby improving limiting effect of the connecting member 31 on the elastic locking piece 10.

Referring to FIG. 1, the first toothed portion 112 may include at least two teeth 1121. The at least two teeth 1121 of the first toothed portion 112 may be arranged on the inner wall 1110 of the connection hole 111 in a circumferential direction of the connection hole 111.

In this way, abutting strength of the connecting member 31 against the inner wall 1110 of the connection hole 111 can be improved.

Referring to FIG. 1, the connection hole 111 may include a first flat surface 1111. The first flat surface 1111 may extend along the length direction of the elastic locking piece 10. The at least one tooth 1121 of the first toothed portion 112 may protrude from the first flat surface 1111.

In this way, vibrating of the elastic locking piece 10 during movement in the length direction can be reduced.

In FIG. 1, an extension direction of the first flat surface 1111 may correspond to a length direction of the connection hole 111. When the elastic locking piece 10 moves relative to the connecting member 31 in the length direction of the connection hole 111, the connecting member 31 easily abuts against the teeth 1121 located on the first flat surface 1111, thereby suppressing a vibrating amplitude of the elastic locking piece 10.

Referring to FIG. 1, the inner wall 1110 of the connection hole 111 may include a second flat surface 1112 opposite to the first flat surface 1111. The at least one tooth 1121 is disposed on both the first flat surface 1111 and the second flat surface 1112.

In this way, effect of reducing the vibrating amplitude of the elastic locking piece 10 can be improved.

In FIG. 1, the first flat surface 1111 may be a wall structure on a side of the inner wall 1110 of the connection hole 111 close to the direction A5, and the second flat surface 1112 may be a wall structure on a side of the inner wall 1110 of the connection hole 111 close to the direction A6, enabling the first flat surface 1111 and the second flat surface 1112 to be opposite to each other. When the elastic locking piece 10 moves relative to the connecting member 31 in the length direction of the connection hole 111, the connecting member 31 easily abuts against the tooth 1121 on the first flat surface 1111 and the tooth 1121 on the second flat surface 1112 separately, thereby suppressing the vibrating amplitude of the elastic locking piece 10 in two different directions.

The connection hole 111 may be a kidney-shaped hole. Two opposite inner side walls of the kidney-shaped hole may be respectively formed as the first flat surface 1111 and the second flat surface 1112.

In this way, the kidney-shaped hole can be easily processed due to its simple processing technology.

In FIG. 1, the connection hole 111 may be formed as a structure of a kidney-shaped hole by extending along the direction A1 and the direction A2. An inner side wall of the connection hole 111 in the direction A5, and an inner side wall of the connection hole 111 in the direction A6 may be respectively formed as the first flat surface 1111 and the second flat surface 1112.

Referring to FIG. 1, FIG. 2, and FIG. 4, a slide rail assembly 100 in this application may include the elastic locking piece 10, the slide rail 30, and the connecting member 31. The elastic locking piece 10 may be the elastic locking piece 10 according to any one of the foregoing implementations. The slide rail 30 may include the first slideway 40. The first slideway 40 may be provided with the connecting member 31. The connecting member 31 may pass through and may be connected to a connection hole 111. The connecting member 31 may abut against the tooth 1121 of the first toothed portion 112.

In the slide rail assembly 100, by disposing the first toothed portion 112 in the connection hole 111, the connecting member 31 may interact with the tooth 1121 of the first toothed portion 112 during assembly. This improves limiting effect of the connecting member 111 on the elastic locking piece 10, preventing the elastic locking piece 10 from shifting and rotating, thereby improving safety and stability of the elastic locking piece 10 during movement relative to the slide rail 30.

Referring to FIG. 1, the slide rail 30 may be provided with the fastening hole 45. The connecting member 31 may pass through the fastening hole 45 and the connection hole 111, to restrictively connect the elastic locking piece 10 to the slide rail 30.

Referring to FIG. 1, an extension length of the connection hole 111 in the length direction of the elastic locking piece 10 may be greater than an extension length of the fastening hole 45 in the length direction of the elastic locking piece 10.

In this way, the connection hole 111 can accommodate a tolerance in a movement direction of the elastic locking piece 10 during assembly.

Referring to FIG. 1, the slide rail assembly 100 may include the snap-fit portion 14 and the operating handle 20. The snap-fit portion 14 may be formed at an end of the elastic locking piece 10. The snap-fit portion 14 may include the tab 144. The operating handle 20 may include the handle end 21 and the notch 23. The operating handle 20 may pass through and may be connected to the elastic locking piece 10 via the handle end 21. The snap-fit portion 14 may be configured to elastically abut against the notch 23 of the operating handle 20 via the tab 144, to restrict movement of the handle end 21 in a direction in which the handle end 21 passes through the elastic locking piece 10.

In this way, a position shift of the operating handle 20 in a passing-through direction can be reduced.

Referring to FIG. 1, the snap-fit portion 14 may include the arc-shaped arm 141, the first straight arm 142, and the second straight arm 143. The arc-shaped arm 141 may bend and extend from the elastic locking piece 10. The arc-shaped arm 141, the first straight arm 142, the second straight arm 143, and the tab 144 may be sequentially connected to form a bent structure 140.

Referring to FIG. 2, the first straight arm 142, the second straight arm 143, and the tab 144 may be disposed in a same plane. The elastic locking piece 10 may include the fastening portion 11. The fastening portion 11 may be provided with the connection hole 111. The arc-shaped arm 141 may be connected to the fastening portion 11. The elastic locking piece 10 may be configured such that an angle formed by the first flat surface 1111 and the second flat surface 1112 ranges from 10° to 30°. The first flat surface 1111 may be a plane in which the first straight arm 142, the second straight arm 143, and the tab 144 are disposed. The second flat surface 1112 may be a plane in which the fastening portion 11 is disposed.

In this way, a snap-fit fastening effect of the snap-fit portion 14 can be ensured.

Referring to FIG. 1 and FIG. 3, the slide rail assembly 100 may include the first bending portion 12. The first bending portion 12 may be provided with the first opening 122. The first opening 122 may be configured to allow the operating handle 20 to pass through the elastic locking piece 10. The operating handle 20 may include an end transition section. A shape of a surface of the side wall of the first opening 122 may match a shape of a surface of the end transition section.

In this way, a contact area between the operating handle 20 and the elastic locking piece 10 can be increased, and smooth effect of the operating handle 20 and the elastic locking piece 10 during transmission can be improved.

Referring to FIG. 1, FIG. 2, and FIG. 5, the elastic locking piece 10 may include the locking portion 13 and the second bending portion 15. The locking portion 13 may extend along the direction that is away from the connection hole 111. The locking portion 13 may include the second toothed portion 131. The second toothed portion 131 may include the at least one tooth 1121. The tooth 1121 of the second toothed portion 131 may be located at an end of the locking portion 13 away from the connection hole 111. The second bending portion 15 may extend from the end of the locking portion 13 away from the connection hole 111. At least a portion of the second bending portion 15 may extend out of the first slideway 40. The second bending portion 15 may be configured such that the portion of the second bending portion 15 that extends out of the first slideway 40 can be driven under an acting force, to drive the second toothed portion 131 to move around the connection hole 111.

In this way, locking and unlocking effect of the slide rail 30 can be simply achieved.

Referring to FIG. 1 to FIG. 5, the slide rail assembly 100 may include the silencing member 16, the elastic limiting member 46, and the operating handle 20. The silencing member 16 may be disposed on the elastic locking piece 10. The elastic limiting member 46 may be disposed on the first slideway 40. The operating handle 20 may include the handle end 21. The operating handle 20 may pass through and may be connected to the elastic locking piece 10 via the handle end 21. The silencing member 16 and the elastic limiting member 46 may be configured to cooperatively abut against the handle end 21, to restrict movement of the operating handle 20 in a direction in which the operating handle 20 passes through the elastic locking piece 10.

In this way, a position shift of the operating handle 20 in a passing-through direction can be reduced.

Referring to FIG. 5 and FIG. 6, the slide rail 30 may include the second slideway 50. The first slideway 40 and the second slideway 50 may be disposed in parallel. The first slideway 40 may be provided with the toothed window 42. The second slideway 50 may be provided with the toothed groove 51. The slide rail 30 may have an unlocked state and a locked state. In the locked state, the second toothed portion 131 of the elastic locking piece 10 may extend into the toothed window 42 and the toothed groove 51, to lock the first slideway 40 and the second slideway 50. In the unlocked state, the second toothed portion 131 may extend out of the toothed groove 51, enabling the first slideway 40 to move relative to the second slideway 50.

In this way, locking and unlocking effect of the slide rail 30 can be simply achieved.

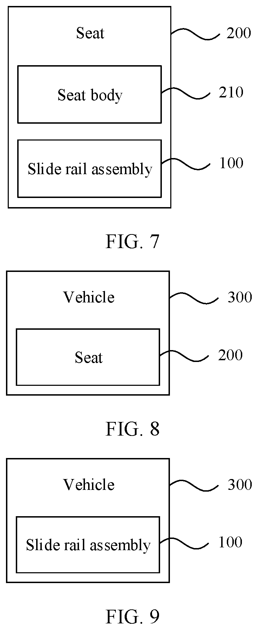

Referring to FIG. 7, a seat 200 in this application may include a seat body 210 and the slide rail assembly 100 according to any one of the foregoing implementations. The seat body 210 may be fastened to the first slideway 40.

Specifically, the slide rail assembly 100 in this application may be applied to the seat 200. The first slideway 40 may be fastened to the seat body 210, and the second slideway 50 may be fastened to a seat mounting base (not shown in the figure). The slide rail 30 may be in the locked state, enabling the seat body 210 to be fastened relative to the seat mounting base, thereby fastening the seat body 210. The slide rail 30 may be in the unlocked state, enabling the seat body 210 to move relative to the seat mounting base, thereby adjusting the seat body 210.

In the seat 200, by disposing the first toothed portion 112 in the connection hole 111, the connecting member 31 may interact with the tooth 1121 of the first toothed portion 112 during assembly. This improves limiting effect of the connecting member 111 on the elastic locking piece 10, preventing the elastic locking piece 10 from shifting and rotating, thereby improving safety and stability of the elastic locking piece 10 during movement relative to the slide rail 30.

Referring to FIG. 8 and FIG. 9, a vehicle 300 in an implementation of this application may include the seat 200 according to the foregoing implementation, or may include the slide rail assembly 100 according to the foregoing implementation.

The vehicle 300 may include a vehicle, or may include an aircraft. By disposing the seat 200 with the slide rail assembly 100 of this application in the vehicle 300, when the seat 200 needs to be fastened, the slide rail 30 may be switched to the locked state, and when the seat 200 needs to be adjusted, the slide rail 30 may be switched to the locked state. Due to the interaction between the first toothed portion 112 disposed on the side wall of the connection hole 111 and the connecting member 31, after assembly of the slide rail assembly 100 is completed, the connecting member 31 can be deformed under a force, to fill a gap between teeth 1121 of the first toothed portion 112. This achieves effect of absorbing an external force, thereby preventing stability of the seat 200 from being affected when the elastic locking piece 10 is subjected to the external force.

In the vehicle 300, by disposing the first toothed portion 112 in the connection hole 111, the connecting member 31 may interact with the tooth 1121 of the first toothed portion 112 during assembly. This improves limiting effect of the connecting member 111 on the elastic locking piece 10, preventing the elastic locking piece 10 from shifting and rotating, thereby improving safety and stability of the elastic locking piece 10 during movement relative to the slide rail 30.

Furthermore, terms "first" and "second" are used for descriptive purposes only and should not be construed as indicating or implying the relative importance or implicitly indicating the number of the indicated technical features. Therefore, a feature limited by "first" and "second" may explicitly or implicitly include one or more features. In the descriptions of this application, unless otherwise specifically limited, "a plurality of" means two or more.

In the description of this application, it will be understood that the orientations or position relationships indicated by terms (such as "central", "longitudinal", "transverse", "length", "width", "thickness", "upper", "lower", "front", "rear", "left", "right", "vertical", "horizontal", "top", "bottom", "inner", "outer", "clockwise", "counterclockwise" and the like) are orientations or position relationships shown based on the accompanying drawings, for ease of describing this application and understanding corresponding implementation only, rather than indicating or implying that the indicated apparatus or element must have a particular orientation or be constructed and operated in a particular orientation. Therefore, the terms indicating the orientations or position relationships cannot be construed as a limitation to this application.

In the description of this application, unless otherwise clearly specified and limited, that a first feature is "above" or "below" a second feature may include that the first feature is in direct contact with the second feature, or may include that the first feature is not in direct contact with the second feature but is in contact with the second feature through another feature between the first feature and the second feature. Moreover, the first feature being "above", "over", or "on" the second feature includes the first feature being directly above or obliquely above the second feature, or simply means that the first feature has a higher level than the second feature. The first feature being "under", "beneath", or "below" the second feature includes the first feature being directly under or obliquely under the second feature, or simply means that the first feature has a lower level than the second feature.

In the description of this application, it will be noted that unless otherwise expressly specified and defined, terms such as "installed", "connected to each other", and "connected to" should be comprehended in a broad sense. For example, a connection may be a fixed connection, a detachable connection, or an integral connection; a direct connection, or an indirect connection through an intermediate medium, or internal communication between two components, or an interactive relationship between two components. For those of ordinary skill in the art, the specific meanings of the above terms in this application may be interpreted according to the specific condition.

Although implementations of this application are shown and described, a person of ordinary skill in the art will understand that various changes, modifications, replacements, and variations can be made to the implementations of this application, without departing from the principles and purposes of this application. The scope of this application is defined by the claims and their equivalents.

## Claims

1. An elastic locking piece (10), adapted to a slide rail (30), the elastic locking piece (10) being provided with a connection hole (111), a first toothed portion (112) being disposed at an inner wall (1110) of the connection hole (111), the first toothed portion (112) comprising at least one tooth (1121), and the at least one tooth (1121) of the first toothed portion (112) protruding from the inner wall (1110) of the connection hole (111); and
the connection hole (111) being configured to: allow a connecting member (31) of the slide rail (30) to pass through, and enable the connecting member (31) to abut against the first toothed portion (112).

2. The elastic locking piece (10) according to claim 1, wherein the first toothed portion (112) comprises at least two teeth (1121), and the at least two teeth (1121) of the first toothed portion (112) are arranged on the inner wall (1110) of the connection hole (111) in a circumferential direction of the connection hole (111).

3. The elastic locking piece (10) according to claim 1 or 2, wherein the inner wall (1110) of the connection hole (111) comprises a first flat surface (1111), the first flat surface (1111) extends along a length direction of the elastic locking piece (10), and the at least one tooth (1121) of the first toothed portion (112) protrudes from the first flat surface (1111).

4. The elastic locking piece (10) according to claim 3, wherein the inner wall (1110) of the connection hole (111) comprises a second flat surface (1112) opposite to the first flat surface (1111), and the at least one tooth (1121) is disposed on both the first flat surface (1111) and the second flat surface (1112).

5. The elastic locking piece (10) according to claim 4, wherein the connection hole (111) is a kidney-shaped hole, and two opposite inner side walls of the kidney-shaped hole are respectively formed as the first flat surface (1111) and the second flat surface (1112).

6. The elastic locking piece (10) according to any one of claims 1 to 5, wherein the connecting member (31) is disposed at a first slideway (40) of the slide rail (30), to restrictively connect the elastic locking piece (10) to the slide rail (30).

7. The elastic locking piece (10) according to any one of claims 1 to 6, wherein at least a portion of the connecting member (31) is configured to elastically deform when abutting against the first toothed portion (112).

8. A slide rail assembly (100), comprising:
the elastic locking piece (10) according to any one of claims 1 to 7;
a slide rail (30), the slide rail (30) comprising a first slideway (40); and
a connecting member (31) disposed on the first slideway (40), the connecting member (31) passing through the connection hole (111), and the connecting member (31) abutting against the first toothed portion (112).

9. The slide rail assembly (100) according to claim 8, wherein the slide rail (30) is provided with a fastening hole (45), and the connecting member (31) passes through the fastening hole (45) and the connection hole (111), to restrictively connect the elastic locking piece (10) to the slide rail (30).

10. The slide rail assembly (100) according to claim 9, wherein an extension length of the connection hole (111) in a length direction of the elastic locking piece (10) is greater than an extension length of the fastening hole (45) in the length direction of the elastic locking piece (10).

11. The slide rail assembly (100) according to any one of claims 8 to 10, wherein the slide rail assembly (100) comprises:
a snap-fit portion (14), wherein an end of the elastic locking piece (10) forms the snap-fit portion (14), and the snap-fit portion (14) comprises a tab (144); and
an operating handle (20), the operating handle (20) comprising a handle end (21) and a notch (23), and the operating handle (20) passing through and being connected to the elastic locking piece (10) via the handle end (21); and
wherein the snap-fit portion (14) is configured to elastically abut against the notch (23) of the operating handle (20) via the tab (144), to restrict movement of the handle end (21) in a direction in which the handle end (21) passes through the elastic locking piece (10).

12. The slide rail assembly (100) according to claim 11, wherein the snap-fit portion (14) comprises an arc-shaped arm (141), a first straight arm (142), and a second straight arm (143), the arc-shaped arm (141) bends and extends from the elastic locking piece (10), and the arc-shaped arm (141), the first straight arm (142), the second straight arm (143), and the tab (144) are sequentially connected to form a bent structure (140).

13. The slide rail assembly (100) according to claim 12, wherein the first straight arm (142), the second straight arm (143), and the tab (144) are disposed in a same plane;
the elastic locking piece (10) comprises a fastening portion (11), the fastening portion (11) is provided with the connection hole (111), and the arc-shaped arm (141) is connected to the fastening portion (11); and
the elastic locking piece (10) is configured such that an angle formed by the first flat surface (1111) and the second flat surface (1112) ranges from 10° to 30°, the first flat surface (1111) is a plane in which the first straight arm (142), the second straight arm (143), and the tab (144) are disposed, and the second flat surface (1112) is a plane in which the fastening portion (11) is disposed.

14. A seat (200), comprising:
a seat body (210); and
the slide rail assembly (100) according to any one of claims 8 to 13, the seat body (210) being fastened to the first slideway (40).

15. A vehicle (300), comprising:
the seat (200) according to claim 14, or the slide rail assembly (100) according to any one of claims 8 to 13.
